## Europäisches Patentamt

## European Patent Office

## Office européen des brevets

(11) Numéro de publication: **0 239 458**
**B1**

(12) **FASCICULE DE BREVET EUROPEEN**

(51) Int. Cl.⁴: **F16H 21/12**

(45) Date de publication du fascicule du brevet:
28.06.89

(21) Numéro de dépôt: **87400515.0**

(22) Date de dépôt: **09.03.87**

(54) Dispositif de couplage mécanique de deux arbres parallèles permettant leur rotation dans le rapport 2/1.

(30) Priorité: **14.03.86 FR 8603650**

(43) Date de publication de la demande:
**30.09.87 Bulletin 87/40**

(45) Mention de la délivrance du brevet:
**28.06.89 Bulletin 89/26**

(84) Etats contractants désignés:
**DE GB IT**

(56) Documents cités:
**FR-A- 2 053 719**

(73) Titulaire: **THOMSON-CSF, 51, Esplanade du Général de Gaulle, F-92800 Puteaux(FR)**

(72) Inventeur: **Hubert, Charles, THOMSON-CSF SCPI 19, avenue de Messine, F-75008 Paris(FR)**

(74) Mandataire: **Trocellier, Roger et al, THOMSON-CSF SCPI, F-92045 PARIS LA DEFENSE CEDEX 67(FR)**

ACTORUM AG

## Description

La présente invention concerne un dispositif de couplage mécanique de deux arbres parallèles permettant leur rotation dans le rapport 2/1 (ou 1/2 selon l'arbre menant considéré).

De manière plus précise, l'invention est destinée à assurer des conditions de rotation angulaire relative avec une grande fiabilité entre deux arbres dont les axes de rotation sont parallèles mais dont le mouvement de rotation est limité dans un secteur angulaire donné inférieur aux valeurs limites $\pm\pi/2$ pour l'arbre dont le mouvement est le plus lent.

On désire atteindre ce but avec une grande précision et avec un équipement assurant une liaison rigide, sans jeu, avec un minimum de couple parasite, et très peu sensible aux vibrations d'environnement. Une application est en effet envisagée dans le domaine de l'avionique où les équipements optroniques aéroportés sont exposés à des vibrations sévères.

Une technique connue consiste à utiliser la propriété du cercle selon laquelle l'angle au centre est de valeur double de l'angle inscrit correspondant. Cette technique utilise un montage dérivé de celui du plateau manivelle entraînant un balancier à coulisse. Le plateau manivelle est réduit à une manivelle qui est solidaire d'un premier arbre et qui tourne dans un secteur délimité, ce premier arbre étant celui qui correspond à l'angle au centre et qui tourne donc le plus rapidement. Le balancier est constitué par un bras solidaire du deuxième arbre et qui possède une glissière dans laquelle se déplace le maneton qui est à l'extrémité de la manivelle. La distance entre les axes de rotation des arbres parallèles est égale au rayon R du cercle et à la longueur de la manivelle entre le premier axe de rotation et le maneton terminal. Dans ces conditions le deuxième arbre tourne d'un angle moitié de la rotation effectuée par le premier arbre. Cette solution a l'inconvénient de présenter du jeu entre le maneton et la glissière, ou du frottement si ce jeu est réduit ou rattrapé par un usinage plus serré; de plus, l'usinage de la glissière peut être considéré comme assez délicat pour améliorer la précision.

Une solution de ce type décrite dans FR-A 2 053 719 remédie en partie à ces inconvénients, comportant une première pièce solidaire d'un premier arbre tournant autour d'un premier axe de rotation, une deuxième pièce solidaire d'un deuxième arbre tournant autour d'un deuxième axe de rotation, la première pièce comportant un premier élément de guidage situé à une distance du premier axe égale à celle entre-axes, la deuxième pièce étant pourvue d'une surface plane le long de laquelle se déplace ledit premier élément de guidage pour produire une rotation angulaire double du premier arbre par rapport au deuxième arbre quel que soit le sens de la rotation; un dispositif ressort permet de maintenir le premier élément de guidage appuyé continuellement sur la surface plane.

Cette solution présente encore des inconvénients, notamment du point de vue tenue aux vibrations.

Le but de l'invention est d'aménager ces solutions connues en sorte que le montage puisse répondre aux caractéristiques techniques sévères d'exploitation citées précédemment.

Suivant l'invention il est proposé un dispositif de couplage mécanique de deux arbres parallèles, permettant une rotation double de l'un par rapport à l'autre, conforme à la revendication 1.

Les particularités et avantages de la présente invention apparaîtront dans la description qui suit donnée à titre d'exemple à l'aide des figures annexées qui représentent:

Fig. 1, un schéma de rappel du principe de base utilisé dans la solution antérieure et dans la solution conforme à l'invention;

Fig. 2, un schéma synoptique représentant l'adaption du principe de base à une réalisation conforme à l'invention;

Fig. 3, un schéma d'un premier mode de réalisation conforme à l'invention;

Fig. 4, une version préférée et améliorée du mode de réalisation selon la figure 3;

Figs. 5 et 6, des détails de réalisation des éléments du montage selon le mode de réalisation figure 4;

Figs. 7, 8 et 9, d'autres modes de réalisation d'un dispositif conforme à l'invention;

Fig. 10, un schéma partiel d'une variante de réalisation appliquée à la version figure 4;

Fig. 11, un schéma d'un exemple d'utilisation d'un dispositif de couplage conforme à l'invention pour stabiliser dans l'espace une direction de visée ou d'illumination par réflexion sur un miroir.

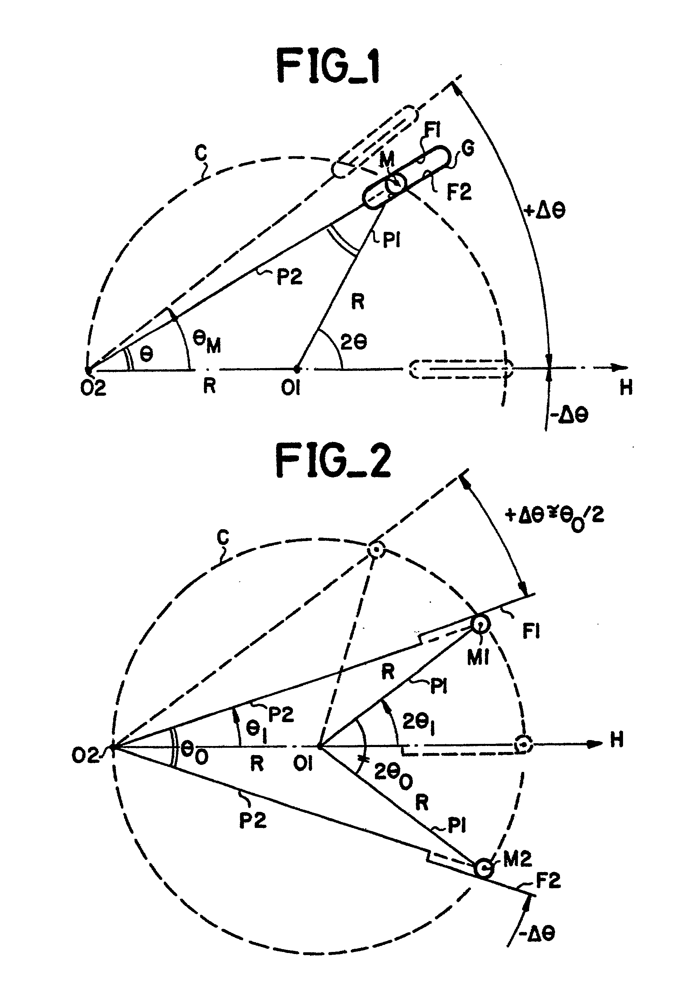

En se reportant à la figure 1 des arbres parallèles sont représentés par les traces O1 et O2 de leurs axes de rotation, ces points se trouvant le long d'un axe H de référence pour la position angulaire. On désigne par R le rayon du cercle C, le point M du cercle représente le maneton à l'extrémité de la manivelle ou première pièce P1. Le maneton se déplace dans une glissière G qui comporte les faces planes F1 et F2. On a représenté la course angulaire autorisée par un tel montage dans un sens; il est évident qu'une course angulaire équivalente de signe opposé est produite symétirquement par rapport à l'axe H. Il en résulte une course angulaire $\pm\theta M$ pour la pièce P2 solidaire de l'arbre d'axe O2 tandis que la pièce P1 solidaire de l'arbre d'axe O1 aura une course double $\pm 2\theta M$.

En se rapportant maintenant à la figure 2 on voit que la solution de la figure 1 est doublée pratiquement en ce sens que la pièce solidaire de l'axe O1 comporte deux éléments de guidage M1 et M2 sur le cercle C et la pièce P2 comporte les surfaces planes F1 et F2 disposées angulairement à une valeur angulaire fixe déterminée $\theta_0$. Le deuxième élément de guidage M2 est également à la distance R du centre O1 et forme avec le premier élément de guidage M1 un angle au centre de valeur constante $2\theta_0$. On a de même, pour tout déplacement angulaire de valeur $\theta_1$, une rotation autour de l'axe O2 de valeur double $2\theta_1$ autour de l'axe O1 pour l'autre arbre, et vice versa. Dans cette nouvelle solution la glissière G est remplacée par un moyen de guidage où les deux surfaces planes F1 et F2 sont éloignées l'une de l'autre et donc d'usinage plus aisé. En outre, comme on le verra ultérieurement un dispositif ressort annexe non figuré permet d'assurer de manière continue l'appui des éléments de guidage M1 et M2 sur ces surfaces planes. De même que dans le cas de la figure 1, les surfaces sont orientées en direction de l'axe de rotation O2 au décalage près dû au diamètre présenté par les éléments de guidage M1 et M2 qui sont réalisés, de préférence, au moyen de roulements à billes comme on le verra par la suite.

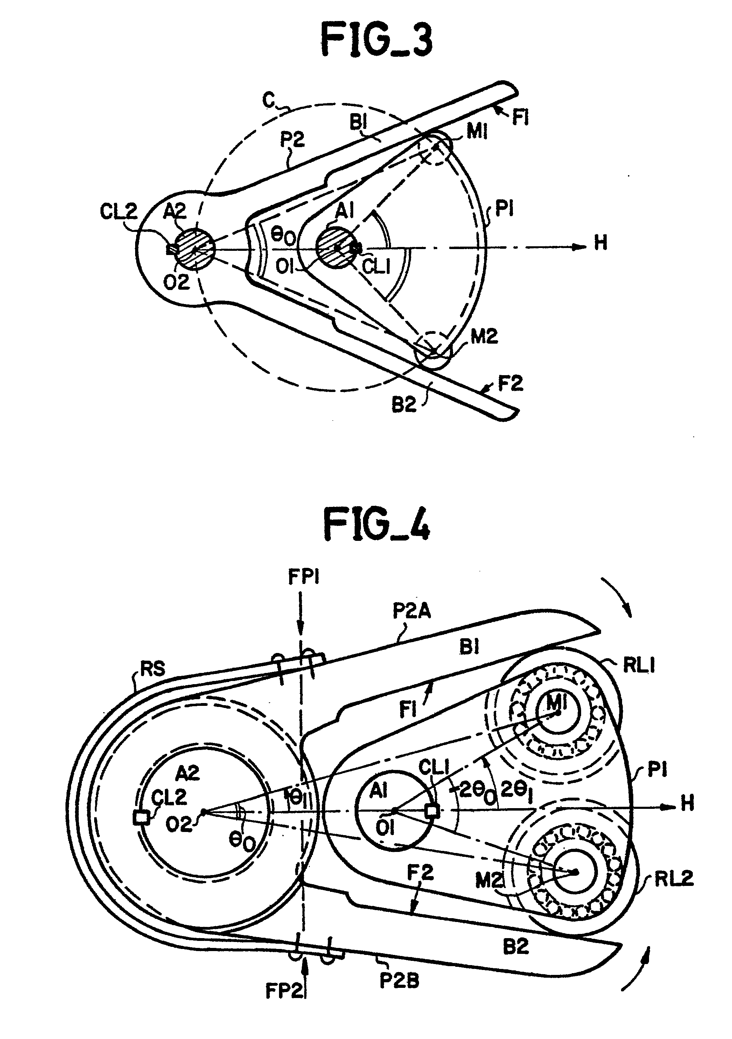

La figure 3 représente une version simplifiée de réalisation d'un dispositif conforme au principe de base mis en valeur par la figure 2. Les pièces P1 et P2 sont réalisées chacune à l'aide d'un seul élément. La pièce P1 a une forme sensiblement d'un secteur terminé à l'extrémité par les manetons, ou roulements, de centre M1 et M2. La pièce P1 est rendue solidaire d'un arbre A1 par un dispositif CL1 tel un clavetage. La pièce P2 présente assez sensiblement la forme d'une pince à ouverture fixe correspondant à l'angle $\theta_0$ avec deux bras B1 et B2 comportant des surfaces planes usinées F1 et F2. La pièce P2 est rendue solidaire d'un arbre A2 par un dispositif CL2 tel un clavetage.

Les figures suivantes représentent des réalisations préférentielles suivant lesquelles la pièce P1, ou la pièce P2, est réalisée en deux parties et dans lesquelles un dispositif ressort RS est prévu pour maintenir en appui les éléments de guidage M1 et M2 sur les surfaces F1 et F2, ces éléments de guidage étant réalisés avec des roulements à billes RL1 et RL2 pour éliminer les pertes par frottement et éviter les couples parasites correspondants.

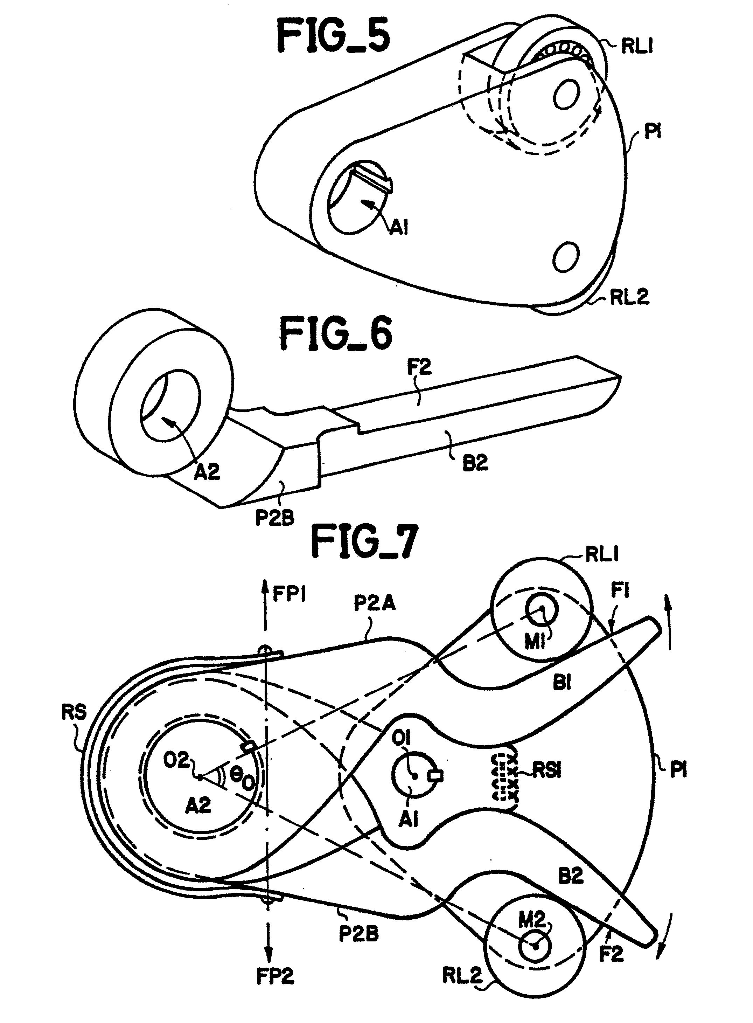

Les figures 4 et 7 se rapportent à des modes de réalisation suivant lesquelles la pièce P2 est réalisée en deux parties. Une première partie P2A est solidaire de l'arbre A2 par clavetage CL2 ; elle comporte le bras B1 et la surface F1, la deuxième partie P2B est sensiblement la même que la première partie à l'exception toutefois qu'elle n'est pas clavetée sur l'arbre A2 et qu'elle peut donc tourner librement autour de cet arbre ; elle comporte le bras B2 et la surface F2. Le ressort RS peut être constitué, par exemple, à l'aide d'une lame fixée en extrémité à la base des bras B1 et B2 et agissant de manière à refermer la pince formée par ces bras. La pièce P1 est aménagée pour recevoir les éléments de guidage centrés sur M1 et M2 et constitués par des roulements à billes RL1 et RL2.

La figure 5 montre en perspective une réalisation possible de la pièce P1 de la figure 4 dans laquelle sont usinés des logements pour recevoir l'arbre A1 et les roulements RL1 et RL2.

La figure 6 représente l'une des deux autres pièces en l'occurrence la pièce P2B, la pièce P2A étant semblable sauf du point de vue usinage du diamètre interne recevant l'arbre A2 et de l'usinage éventuel d'une rainure de clavetage.

Dans ces montages l'action du ressort RS est représentée par les forces FP1 et FP2. Elles tendent à resserrer la pince formée par les bras P2A et P2B dans le cas de la figure 4. La pièce P2B étant montée folle sur l'arbre A2, il en résulte la mise en contact continue avec une force d'application relativement importante des roulements RL1 et RL2 sur les surfaces d'appui correspondantes F1 et F2, ce qui assure une absence de jeu au montage et une protection fiable contre les vibrations. Etant donné que l'angle $\theta_0$ entre les mâchoires est une constante, le ressort exerce un couple de serrage constant. De plus, le travail du ressort étant nul, quel que soit le mouvement du mécanisme, on en déduit par application du principe des travaux virtuels qu'il n'existe aucun couple de rappel lorsque l'angle $\theta_1$ varie. Les roulements RL1 et RL2 sont réalisés éventuellement en utilisant des paires de roulements précontraints pour éliminer les jeux.

Les angles de rotation sont limités autour de la position de symétrie H du dispositif par les formes de construction choisies, à des valeurs angulaires assez faibles, mais il est facile de transposer la réalisation figurée et de la modifier pour permettre des débattements plus importants. La valeur de l'angle $\theta_0$ peut être choisie au mieux, selon le débattement total envisagé et des considérations d'encombrement et de rigidité des composants mécaniques.

Dans la réalisation figure 7, les surfaces planes de roulement F1 et F2 sont orientées vers l'extérieur au lieu d'être orientées vers l'intérieur comme dans le cas de la figure 4. Les points d'appui des roulements sur ces surfaces sont à l'intérieur du secteur O1, M1, M2 au lieu d'être à l'extérieur, comme le cas précédent. Il en résulte une forme de réalisation différente des bras B1 et B2 qui sont de plus aménagés de manière à ne pas entrer en contact avec l'arbre A1 au cours du débattement angulaire envisagé. L'action du ressort RS comme le montre les forces FP1 et FP2 tend cette fois à écarter les bras l'un de l'autre pour réaliser l'appui sur les roulements RL1 et RL2 des surfaces F1 et F2. Pour la compréhension du dessin il faut considérer les pièces P2A, P2B et les roulements RL1, RL2 situés devant le secteur P1 qui se trouve à l'arrière du plan de figure. Le ressort RS est fixé à ses extrémités sur les parties larges des pièces P2A et P2B considérées agencés comme dans le cas de la figure 6 pour former une pince. Le ressort est dans ce cas comprimé pour produire les forces FP1 et FP2 de sens approprié. Le ressort peut être conçu différemment, par exemple comme représenté en RS1 entre les bras B1 et B2. Les roulements sont solidaires du secteur P1 par les axes mécaniques sur lesquels ils sont montés. Pour éviter les couples parasites, les attaches du ressort sont dans un même plan perpendiculaire à l'axe O2, la même remarque vaut pour le montage des roulements. Les forces FP1 et FP2 sont égales et opposées.

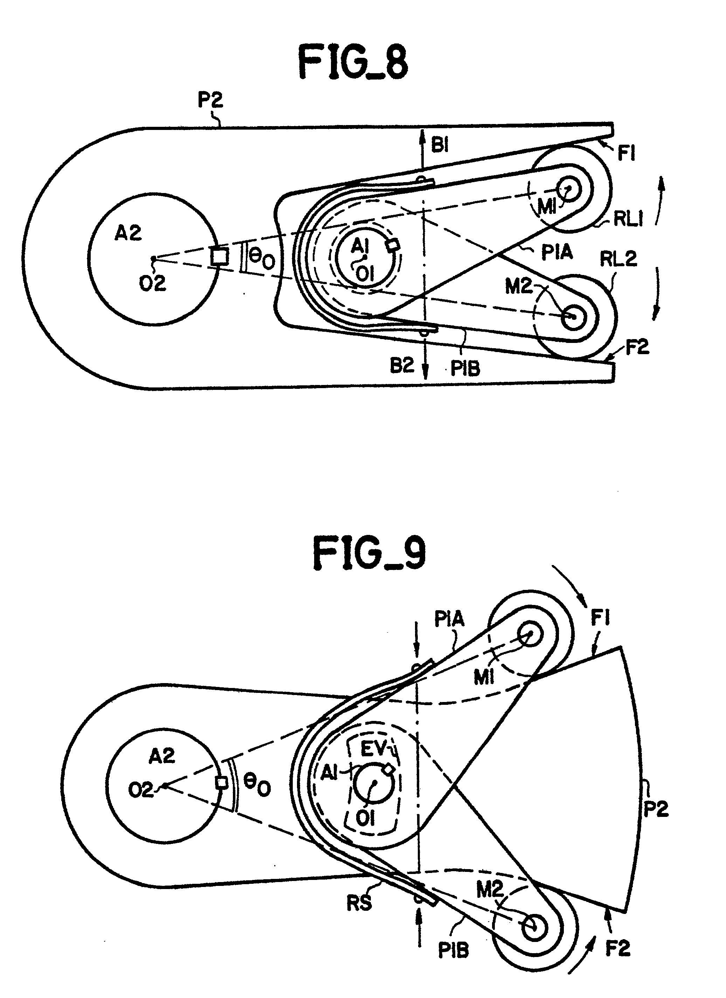

Les figures suivantes 8 et 9 se rapportent à d'autres modes de réalisation suivant lesquelles cette fois la pièce P2 est formée d'un seul élément en forme de diapason (Fig.8) ou quasi-rectangulaire (Fig.9) et c'est la pièce P1 qui est réalisée en deux parties. De même que précédemment l'une de ces parties P1A est montée solidaire de l'arbre A1 par clavetage CL1 tandis que la deuxième partie P1B est montée folle sur l'arbre A1 et tourne librement autour de l'axe O1, le ressort RS est monté de manière à assurer l'application continue des roulements sur les surfaces d'appui F1 et F2. La réalisation du ressort dans le cas de la figure 9 est semblable à celles évoquées dans les cas précédents. En outre, dans la figure 9 on remarque que la pièce P2 comporte une partie évidée EV qui est ménagée pour éviter de rentrer en contact avec l'arbre A1 au cours de la rotation.

Selon le débattement angulaire à obtenir certaines des réalisations figures 4 à 9 peuvent être considérées préférables aux autres. Il y a lieu de tenir compte également que certaines formes de réalisation des pièces P1 et P2 présentent une plus grande rigidité et donc une meilleure protection contre les vibrations.

En outre certaines formes des pièces P2 permettent d'ajouter moins de moment d'inertie que d'autres sur l'arbre A2, ce qui conduit à une meilleure stabilisation de l'arbre A1.

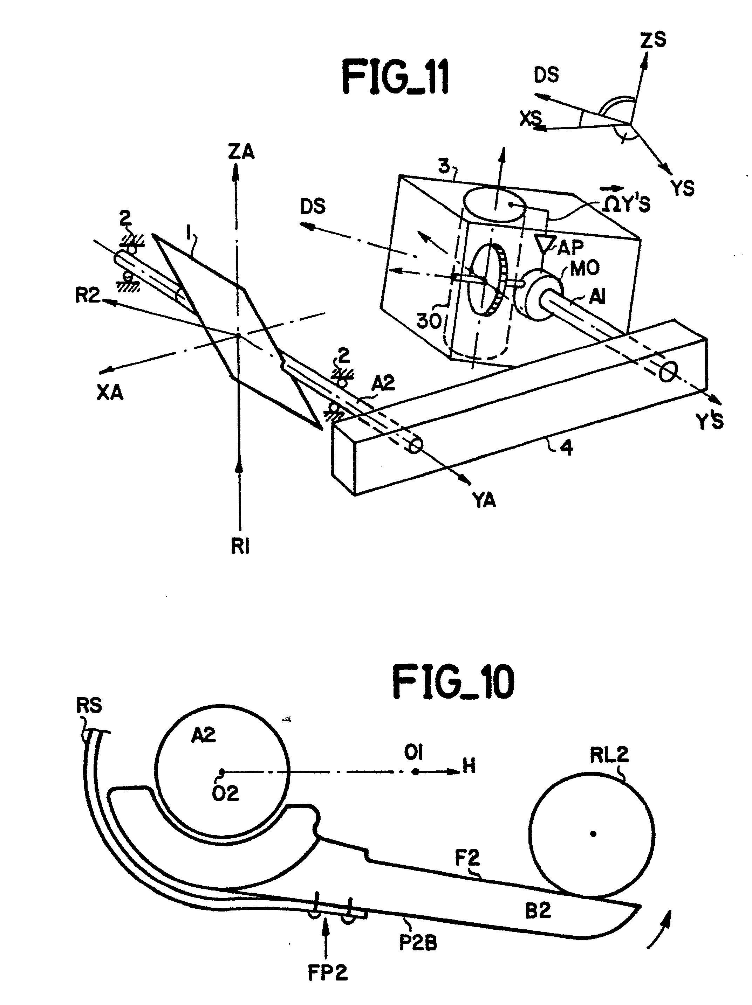

Le dispositif décrit admet de nombreuses variantes conformes à l'invention. En particulier, dans chacune des quatre versions décrites à l'aide des figures 4 à 9, la pièce montée folle sur l'arbre associé, par exemple, P2B dans la version figure 4, n'a pas besoin d'entourer totalement l'arbre associé, A2 dans ce cas. La force FP2 due au ressort RS peut être mise à profit pour maintenir le pièce P2B en place comme représenté sur la figure 10 qui illustre une partie détaillée correspondante de cette version. L'extrémité de la pièce P2B, côté arbre A2, n'entoure que partiellement cet arbre contre lequel elle est appliquée par le ressort RS.

La figure 11 se rapporte à une application à un équipement optronique aéroporté. L'arbre A2 entraîne un miroir 1 autour d'un axe YA. La direction YA est contenue dans le plan du miroir. Des paliers sont prévus pour permettre la rotation et relier l'ensemble à la structure avion 2. La direction du rayonnement R1 est réfléchie selon R2, ou inversement. On considère la direction R1 fixe par rapport à la structure avion, par exemple, celle d'un axe optique d'émission laser, ou inversement d'un axe optique de réception d'une image TV dans le cas d'un système de désignation d'objectif par laser. La direction R1 peut correspondre à un axe ZA du trièdre avion, XA représentant l'axe longitudinal ou axe tangage et YA l'axe transversal ou axe roulis.

A titre de simplification on considère la stabilisation dans des mouvements autour seulement d'un axe parallèle à YA et YS. En supposant que l'on veuille regarder une direction R2 fixe par rapport à un trièdre galiléen XS YS ZS (direction représentée par DS). Lorsque l'avion tourne autour de YA de - Δθ dans le trièdre galiléen, la direction fixe DS tour- ne de + Δθ par rapport au trièdre de l'avion. Avec un dispositif gyroscopique 30 convenablement installé sur la plateforme 3, on détecte les mouvements angulaires par rapport au trièdre de galiléen de cette plateforme autour de Y'S parallèle à YS et par un dispositif d'asservissement symbolisé par les éléments amplificateur AP et d'entraînement et de détection angulaire MO. Il est possible à partir de ces mouvements angulaires détectés de faire tourner la plateforme 3 pour que ces mouvements soient toujours identiquement nuls. La direction DS restera alors fixe dans le trièdre galiléen. Pour que la direction R2 reste parallèle à DS, il faut que l'axe YA du miroir tourne de

$$+ \frac{\Delta\theta}{2}$$

par rapport à la structure de l'avion, d'où la nécessité d'accoupler les axes YA et Y'S par un dispositif 4 du type décrit précédemment qui introduit un rapport 2/1 en sorte que la rotation de Y'S est le double de celle de YA.

## Revendications

1. Dispositif de couplage mécanique de deux arbres parallèles permettant une rotation double de l'un par rapport à l'autre, comportant une première pièce (P1) solidaire d'un premier arbre (A1) tournant autour d'un premier axe de rotation (O1), une deuxiè- me pièce (P2) solidaire du deuxième arbre (A2) tournant autour d'un deuxième axe de rotation (O2), la première pièce comportant un premier élément de guidage (M1) situé à une distance du premier axe égale à celle entre-axes, la deuxième pièce étant pourvue d'une première surface plane (F1) le long de laquelle se déplace ledit premier élément de guidage pour produire une rotation angulaire double du premier arbre par rapport au deuxième arbre quel que soit le sens de la rotation, un dispositif ressort (RS) permettant de maintenir ledit premier élément de guidage (RL1) appuyé continuellement sur ladite première surface plane, caractérisé en ce que la première pièce (P1) comporte un deuxième élément de guidage (M2) et la deuxième pièce (P1) une deuxième surface plane (F2) sur laquelle se déplace le deuxième élément de guidage (M2), lesdites surfaces planes faisant entre elles un angle dièdre constant, ledit deuxième élément (M2) étant à la même distance (R) du premier axe (O1) que le premier élément (M1), et en ce que l'une des pièces est en deux parties, la première partie (P1A, P2A) étant solidaire de l'arbre associé (A1, A2) la deuxième partie (P2B, P1B) étant montée libre sur l'arbre associé (A2, A1), le dispositif ressort (RS) étant couplé mécaniquement aux deux parties de manière à maintenir également le deuxième élément de guidage (RL2) appuyé continuellement sur la deuxième surface plane (F2).

2. Dispositif selon la revendication 1, caractérisé en ce que le dispositif ressort (RS) est couplé par une extrémité à la première partie (P1A, P2A) et par son autre extrémité à la deuxième partie (P2B, P1B) de la pièce en deux parties.

3. Dispositif selon la revendication 1 ou 2, caractérisé en ce que lesdits éléments de guidage (M1, M2) sont constitués par des roulement à billes (RL1, TL2).

4. Dispositif selon la revendication 2, ou l'ensemble des revendications 2 et 3, caractérisé en ce que la deuxième pièce (P2) est en deux parties (P2A, P2B), la première partie (P2A) comportant la première desdites surfaces planes (F1) et la deuxième partie (P2B) comportant la seconde desdites surfaces planes (P2B), et en ce que le dispositif ressort (RS) est solidaire par ses extrémités respectivement desdites première et deuxième parties (P2A et P2B) de la deuxième pièce.

5. Dispositif selon la revendication 4, caractérisé en ce que la deuxième pièce (P2) a la forme d'une pince dont les deux bras (B1,B2) sont sollicités en rapprochement par le ressort, la première pièce (P1) ayant la forme d'un secteur sur lequel sont montés les éléments de guidage (RL1, RL2).

6. Dispositif selon la revendication 4, caractérisé en ce que la deuxième pièce (P2) a la forme d'une pince dont les bras (B1,B2) sont sollicités à l'éloignement par ledit ressort (RS) la première pièce (P1) ayant la forme d'un secteur supportant lesdits éléments de guidage (RL1,RL2).

7. Dispositif selon la revendication 2, ou selon l'ensemble des revendications 2 et 3, caractérisé en ce que la première pièce (P1) est en deux parties (P1A, P1B), la première partie (P1A) étant solidaire de l'arbre associé et comportant un premier élément de guidage (RL1), la deuxième partie étant montée libre sur l'arbre associé (A1) et comportant le deuxième élément de guidage (RL2), et en ce que le dispositif ressort (RS) est solidaire par ses extrémités respectivement desdites première et deuxième parties (P1A et P1B) de la première pièce.

8. Dispositif selon la revendication 7, caractérisé en ce que la deuxième pièce (P2) a la forme d'un diapason dont les bras (B1,B2) comportent lesdites surfaces planes, le ressort (RS) ayant pour action d'écarter les deux parties (P1A,P1B) de la première pièce (P1).

9. Dispositif selon la revendication 7, caractérisé en ce que la deuxième pièce (P2) a une forme quasi-rectangulaire comportant les surfaces planes, et que le ressort a une action tendant à rapprocher les deux parties (P1A,P1B) de la première pièce (P1).

10. Dispositif selon l'une quelconque des revendications précédentes, caractérisé en ce qu'il est utilisé pour stabiliser une direction optique (R2) réfléchie par un miroir (1) par rapport à un trièdre galiléen, ledit miroir tournant autour d'un axe YA relié à une structure (2) mobile dans l'espace et cet axe étant couplé par ledit dispositif (4) à une plateforme stabilisée (3).

**Claims**

1. A mechanical coupling device for two parallel shafts making possible a double rotation of the one in relation to the other, comprisisng a first member (P1) secured to a first shaft (A1) rotating about a first axis )O1) of rotation, a second member (P2) secured to the second shaft (A2) rotating about a second axis (O2) of rotation, the first member comprising a first guide element (M1) placed at a distance from the first axis equal to this interaxial distance, the second member being provided with a first plane surface (F1), along which the first guide element runs in order to produce double annular rotation of the first shaft in relation of the second shaft whatever the direction of rotation, a spring means (RS) making it possible to keep the first guide element (RL1) engaged continuously with the said first plane surface, characterized in that first member (P1) comprises a second guide element (M2) and the second member (P1) comprises a second plane surface (F2) on which the second guide element (M2) runs, the said plane surfaces defining a constant angle between them, the said second element (M2) being at the same distance (R) from the first axis (O1) as the first element (M1) and in that one of the members is made in two parts, the first part (P1A and P2A) being fixed to the associated shaft (A1 and A2), the second part (P2B and P1B) being mounted freely on the associated shaft (A2 and A1), the spring means (RS) being coupled mechanically with the two parts in such a manner as also keep the second guide element (RL2) continuously engaged with the second plane surface (F2).

2. The device as claimed in claim 1, characterized in that the spring means (R5) is coupled via one end with the first part (P1A and P2A) and via its other end is coupled with the second part (P2B and P1B) of the member made in two parts.

3. The device as claimed in claim 1 or claim 2, characterized in that the two guide elements (M1 and M2) are constituted by ball bearings (RL1 and RL2).

4. The device as claimed in claim 2 or in claims 2 and 3 taken together, characterized in that the second member (P2) is made in two parts (P2A and P2B), the first part (P2A) comprising the first of the said plane surfaces (F1) and the second part (P2B) comprising the second of the said plane surfaces (P2B), and in that the spring means (RS) is secured by means of its ends respectively with the first and the second parts (P2A and P2B) of the second member.

5. The device as claimed in claim 4, characterized in that the second member (P2) has the form of a tongs whose two arms (B1 and B2) are urged towards each other by the spring, the first member (P1) having the form of a sector on which the guide element (RL1 and RL2) are mounted.

6. The device as claimed in claim 4, characterized in that the second member (P2) has the form of a tongs whose arms (B1 and B2) are urged apart by the said spring (RS), the first member (P1) having the form of a sector supporting the said guide elements (RL1 and RL2).

7. The device as claimed in claim 2, or in claims 2 and 3 taken together, characterized in that the first member (P1) is made in two parts (P1A and P1B), the first part (P1A) being secured to the associated shaft and comprising a first guide element (RL1), the second part being freely mounted on the associated shaft (A1) and comprising the second guide element (RL2), and in that the spring means (RS) is secured by its ends respectively with the first and second parts (P1A and P1B) of the first member.

8. The device as claimed in claim 7, characterized in that the second member (P2) has the form of a tuning fork whose prongs (B1 and B2) comprise the said plane surfaces, the spring (RS) having the effect of moving apart the two parts (P1A and P1B) of the first member (P1).

9. The device as claimed in claim 7, characterized in that the second member (P2) has an almost rectangular form comprising the plane surfaces and in that the spring has an effect tending to move together the two parts (P1A and P1B) of the first member (P1).

10. The device as claimed in any one of the preceding claims, characterized in that it is utilized in order to stabilize an optic direction (R2) reflected by a mirror (1) in relation to a galilean trihedron, the said mirror rotating about a shaft YA connected with a structure (2) moving in the space, said shaft being coupled by the said means (4) with a stabilized platform (3).

**Patentansprüche**

1. Vorrichtung zur mechanischen Koppelung zweier zueinander paralleler Wellen, welche eine doppelte Rotation der einen in bezug auf die andere ermöglicht, mit einem ersten Teil (P1), das mit einer ersten Welle (A1) fest verbunden ist, welche sich um einer erste Rotationsachse (O1) dreht, und mit einem zweiten Teil (P2), das mit der zweiten Welle (A2) fest verbunden ist, welche sich um eine zweite Rotationsachse (O2) dreht, wobei das erste Teil ein erstes Führungselement (M1) umfaßt, das sich in einem Abstand von der ersten Achse befindet, der gleich demjenigen zwischen den Achsen ist, wobei das zweite Teil mit einer ersten ebenen Fläche (F1) versehen ist, entlang welcher das erste Führungselement sich bewegt, um eine doppelte Winkelrotation der ersten Welle in bezug auf die zweite Welle in beliebiger Rotationsrichtung zu erzeugen, wobei eine Federvorrichtung (RS) es ermöglicht, dieses erste Führungselement (RL1) dauernd auf der ersten ebenen Fläche in Abstützposition festzuhalten, dadurch gekennzeichnet, daß das erste Teil (P1) ein zweites Führungselement (M2) und das zweite Teil (P1) eine zweite ebene Fläche (F2) umfassen, auf welcher sich das zweite Führungselement (M2) verschiebt, wobei die ebenen Flächen miteinander einen konstanten Zweiflachwinkel bilden, das zweite Element (M2) sich in demselben Abstand (R) von der ersten Achse (O1) wie das erste Element (M1) befindet, und daß eines der Teile ein zweiteiliges Bauteil ist, wobei das erste Teil (P1A, P2A) mit der zugeordneten Welle fest verbunden ist und das zweite Teil (P2B, P1B) auf der zugeordneten Welle (A2, A1) frei gelagert ist, wobei die Federvorrichtung (RS) an die beiden Teile mechanisch so angekoppelt ist, daß sie auch das zweite Führungselement (RL2) dauernd auf die zweite eben Fläche (F2) abgestützt hält.

2. Vorrichtung nach Anspruch 1, dadurch gekennzeichnet, daß die Federvorrichtung (RS) über ein Ende an das erste Teil (P1A, P2A) und über ihr anderes Ende an das zweite Teil (P2B, P2A) des zweiteiligen Bauteils angekoppelt ist.

3. Vorrichtung nach Anspruch 1 oder 2, dadurch gekennzeichnet, daß die Führungselemente (M1, M2) aus Kugellagern (RL1, RL2) bestehen.

4. Vorrichtung nach Anspruch 2 oder nach den Ansprüchen 2 und 3, dadurch gekennzeichnet, daß das zweite Teil (P2) aus zwei Bestandteilen (P2A, P2B) besteht, wobei der erste Bestandteil (P2A) die erste der ebenen Flächen (F1) und der zweite Bestandteil (P2B) die zweite der ebenen Flächen (P2B) umfaßt, und daß die Federvorrichtung (RS) über ihre Enden mit dem ersten (P2A) Bestandteil bzw. mit dem zweiten (P2B) Bestandteil des zweiten Teils fest verbunden ist.

5. Vorrichtung nach Anspruch 4, dadurch gekennzeichnet, daß das zweite Teil (P2) die Form einer Zange aufweist, deren zwei Arme (B1, B2) durch die Feder zueinander hin beaufschlagt sind, wobei das erste Teil (P1) die Form eines Sektors aufweist, auf welchem die Führungselemente (RL1, RL2) angebracht sind.

6. Vorrichtung nach Anspruch 4, dadurch gekennzeichnet, daß das zweite Teil (P2) die Form einer Zange aufweist, deren zwei Arme (B1, B2) durch die Feder (RS) voneinander fort beaufschlagt sind, wobei das erste Teil (P1) die Form eines Sektors aufweist, der die Führungselemente (RL1, RL2) trägt.

7. Vorrichtung nach Anspruch 2 oder nach den Ansprüchen 2 und 3, dadurch gekennzeichnet, daß das erste Teil (P1) aus zwei Bestandteilen (P1A, P1B) besteht, wobei der erste Bestandteil (P1A) mit der zugeordneten Welle fest verbunden ist und ein erstes Führungselement (RL1) umfaßt, der zweite Bestandteil auf der zugeordneten Welle (A1) frei gelagert ist und das zweite Führungselement (RL2) umfaßt, und daß die Federvorrichtung (RS) über ihre Enden mit dem ersten Bestandteil (P1A) bzw. mit dem zweiten Bestandteil (P1B) des ersten Teils fest verbunden ist.

8. Vorrichtung nach Anspruch 7, dadurch gekennzeichnet, daß das zweite Teil (P2) die Form einer Stimmgabel aufweist, deren Zinken (B1, B2) die ebenen Flächen umfassen, wobei die Wirkung der Feder (RS) darin besteht, die beiden Bestandteile (P1A, P1B) des ersten Teils (P1) voneinander zu entfernen.

9. Vorrichtung nach Anspruch 7, dadurch gekennzeichnet, daß das zweite Teil (P2) eine die ebenen Flächen tragende, quasirechteckige Form aufweist und daß die Wirkung der Feder darin besteht, die beiden Bestandteile (P1A, P1B) des ersten Teils (P1) zueinander hin zu beaufschlagen.

10. Vorrichtung nach einem der vorstehenden Ansprüche, dadurch gekennzeichnet, daß sie verwendet wird, um eine optische Richtung (R2) zu stabilisieren, welche von einem Spiegel (1) in bezug auf ein galileisches Dreiflach umgelenkt wird, wobei der Spiegel sich um eine Achse YA dreht, welche mit einer im Raum beweglichen Struktur (2) verbunden ist, und die Achse durch diese Vorrichtung (4) an eine stabilisierte Plattform (3) angekoppelt ist.

# FIG_1

# FIG_2

# FIG_3

# FIG_4

# FIG_5

RL1

P1

A1

RL2

# FIG_6

F2

A2

B2

P2B

# FIG_7

RL1

FP1

P2A

F1

M1

B1

RS

O2

O1

RS1

P1

θ

A2

A1

B2

M2

P2B

RL2

F2

FP2

# FIG_8

# FIG_9

# FIG_11

# FIG_10